Europäisches Patentamt

(19) European Patent Office

Office européen des brevets

(11) Publication number : **0 457 441 A2**

(12) **EUROPEAN PATENT APPLICATION**

(21) Application number : 91303542.4

(51) Int. Cl.⁵ : **C08J 3/20**

(22) Date of filing : 19.04.91

(30) Priority : 24.04.90 US 513647

(43) Date of publication of application :
21.11.91 Bulletin 91/47

(84) Designated Contracting States :
**BE DE FR GB IT NL SE**

(71) Applicant : **MOBIL OIL CORPORATION**
**3225 Gallows Road**
**Fairfax, Virginia 22037-0001 (US)**

(72) Inventor : **Tinger, Harold G.**
**11 Aspen Court**
**Wayne, New Jersey 07470 (US)**

(74) Representative : **Colmer, Stephen Gary et al**
**Mobil Court 3 Clements Inn**
**London WC2A 2EB (GB)**

(54) Process for compounding a polymer with an antioxidant.

(57) A method of compounding a polymer with an antioxidant additive is improved by injecting the additive downstream of the mixing means, e.g., in a Banbury mixer, thereby reducing the specific energy requirement necessary to produce a pelletized resin, and improving the color of the resin.

EP 0 457 441 A2

The invention is directed to a method of producing a polymer in the form of a pelletized (also known as pelleted) resin containing antioxidant additives, comprising adding the antioxidant additives (antioxidants) downstream of the compounding stage of the method. The invention is also directed to a method of producing pelletized polymer resins containing antioxidants having improved pellet color, at reduced energy input at compared to the production of such granular resins with the addition of the antioxidants to the compounding stage of the method.

Polymer resins, such as pelletized general purpose blow molding resins, are normally compounded by melting a granular polymer, adding the additives into the melt, melt-compounding the mix and pelletizing the additive-containing polymer into pellets. The compounding is usually carried out in a mixer (also known as a compounder), such as a Banbury mixer, a single screw extruder or a twin screw extruder, wherein the polymer and the additives are melt-blended. Subsequently, the melt is conducted to a pump, e.g., a gear pump, which pumps the melt to a filter, such as a screen type filter, wherein impurities, e.g., dirt and melt chips are removed from the melt, a die, wherein the melt is shaped into strands, and a pelletizer which pelletizes the additive-containing polymer melt into pellets. The properties of the resin must meet certain requirements of the manufacturer. For example, the bottle manufacturers require that the resin, when used for the production of bottles by blow-molding, has certain minimum die swell characteristics, i.e., the circumference of the parison produced by the extruder must be within a certain percentage of the circumference of the die used to produce the parison. One of the standard tests used to determine the die swell characteristics of the resin is a bottle weight test, which compares the weight of a bottle made from the test resin, having standardized configuration and length, to the weight of the same bottle made from a standard resin. The weight of the bottle made from the test resin must be within certain limits based on the weight of the bottle made from the test resin. The test resins meeting this test are known as "general purpose blow molding resins". To produce the resin having the requisite die swell characteristics, it has been customary to "tailor" the swell behavior of the resin to meet the requirements of the manufacturers. Tailoring has been accomplished in the past in the mixer in the presence of oxygen (usually in the form of air) at high melt temperatures (e.g., 240 - 255°C). The degree of tailoring is generally controlled by the temperature of the polymer melt, i.e., the higher the temperature, the more tailoring is imparted to the resin which, therefore, has less die swell. The temperature of the polymer melt is directly related to the electrical input of the motor of the mixer. Accordingly, the amount of tailoring of the resin is directly related to the main drive specific energy input (SEI), defined as the ratio of energy input per weight of melt processed per unit of time, and commonly reported in units of KW-hr/kg or HP-hr/lb.

It is common in the art to use antioxidant additives in the compounding of the resins. Such additives prevent or retard the degradation of the products made from the polymers due to oxidation. It is also common to add the additives into the mixer wherein they are melted together with the polymer. However, the additives tend to retard tailoring, therefore requiring a higher specific energy input into the mixer to produce a product having the desired die-swell characteristics. If the main drive power of the mixer is limiting the output of the mixer, and it is desired to produce a resin having specific die-swell characteristics, the desired level of tailoring may reduce the production rates because the melt will have to be maintained in the mixer for a longer period of time to achieve the desired mix temperature. Additionally, color of the product may be affected adversely when the tailoring treatment is conducted in the presence of the antioxidants in the mixer.

Accordingly, it is the primary object of this invention to provide an improved process of producing polymers in the form of a pelletized resin having the required die-swell characteristics without the decrease of the production rates.

It is an additional object of this invention to provide a method for producing a polymer in the form a pelletized resin whose color is not adversely affected by the antioxidants.

A method of preparing a polymer in the form of a pelletized resin containing antioxidant additives comprises introducing the granular polymer into a mixer (also known as a compounder), intentionally adding no antioxidant additives to the mixer, removing the polymer from the mixer, mixing the antioxidant additive with the polymer downstream of the mixer and conducting the polymer containing the antioxidant additive to a pelletizing means, such as a pelletizer, which produces antioxidant additive-containing polymer in the form of a pelletized resin. The injection of the antioxidant additive downstream of the mixer produces polymer pellets (resin) having excellent color characteristics and the desired die-swell characteristics at substantial savings in the specific energy input to the mixer or, alternatively, allows the manufacturer to increase the output rate of the product at the same specific energy input as was used with the injection of the antioxidant into the mixer.

The polymer which can be used in the method of this invention is any conventional polymer, e.g., polyethylene or polypropylene, but preferably it is a copolymer of ethylene and at least one $C_5$ or higher, e.g., C5-C12, preferably C5-10, alpha-olefin having a density of about 0.940 to about 0.970, preferably about 0.950 to about 0.960 g/cc and high load melt index ($I_{21}$) of about 10 to about 80, preferably about 40 to about 60 g/10 min. Such preferred copolymers are referred to in the art as "general purpose blow molding resin". The polymer is usually introduced into the mixer in the granular form and it is liquified in the mixer by increasing the temperature in the mixer to at least the melt temperature of the polymer. The temperature in the mixer is controlled by the specific energy input into the mixer. The higher the energy input, the higher the temperature in the kneading or mixing portion of the mixer. Additionally, it is also possible to provide heat lines surrounding the mixer to promote the melting of the polymer in the mixer.

The mixer is any conventionally used mixer, such as a batch type Banbury mixer, a single screw extruder, a twin screw extruder, or a continuous mixer, such as a Farrel FCM or Farrel UMSD or JSW CMP mixers. No antioxidant additives are intentionally added to the mixer. However, the present invention encompasses the use of a granular resin which may inherently contain small amounts (e.g., about 50 to about 100 ppm) of such antioxidants. Additionally, the invention also encompasses the addition of any conventionally-used additives, other than antioxidant additives, into the mixer, such as pigments, lubricants, stabilizers, antistatic agents or low molecular weight polymers. After the polymer is homogenized in the mixer, it exits the mixer and is conducted to a pumping means, such as a gear pump, which forwards the polymer melt through the downstream screen changer (filter) and pelletizer die. In accordance with one preferred embodiment of this invention, the antioxidant additive is introduced into the suction side of the pumping means. However, as will be apparent to those skilled in the art, the antioxidant additive may be added at any point of the method downstream of the mixer, e.g., anywhere between the mixer and the die, so long as no antioxidant additive is intentionally added to the mixer. Since the polymer is in the molten state, it is preferred to introduce the additive in the molten state to the pumping means. Any conventional means may be used to liquify the antioxidant additive. For example, the additive may be maintained in a heated reservoir, and the lines conducting the additive from the reservoir to the pumping means may also be heated by any conventional means to maintain the additive in the molten state. The antioxidant additives used herein are also known in the art, and they include such additives as primary antioxidants. Preferred antioxidant additives in one particular embodiment of the invention have a melting point of less than about 100°C, e.g., Irganox 1076 or Naugard 76. Both of these antioxidants melt at about 55°C; therefore, the temperature thereof must be increased to and maintained at a temperature slightly higher than 55°C prior to and during the introduction of the additives downstream of the mixer. The additives are preferably injected into the suction side of the pumping means.

The amount of the antioxidant additive added downstream of the mixer, e.g., to the pumping means, is that which is necessary to impart antioxidant properties to the articles made from the resin containing the additive, and it may vary, as will be apparent to those skilled in the art, for each particular polymer resin. Generally, however, it is about 100 to about 1000 ppm (by weight), based on the weight of the resin introduced into the mixer.

The additives are mixed with the molten polymer in the pumping means and the resulting mixture is then processed in a conventional manner, i.e., it is passed through a filter, such as a screen type filter, to eliminate contaminants, such as dirt, melt particles and degraded polymer, and then through a die and a pelletizer. In the die, the melt is shaped into a suitable shape, and then it is conducted to a pelletizer, such as an underwater pelletizer, a strand pelletizer, a dicer, a hot die face pelletizer or a water ring pelletizer, wherein it is formed into particles also known as pellets.

The following Examples illustrate the invention.

EXAMPLES 1-7

(Compounding of HDPE With Antioxidant Injection Into Mixer and Into Suction of a Pump)

A Farrel 4-LMSD continuous mixer of the UMSD type was used for compounding high density polyethylene (HDPE), general purpose blow molding resin, designated Mobil 5340D, obtained from Mobil Chemical Company, having a density of 0.953 g/cc and $I_{21}$ of 40 g/10 min. Irganox 1076 antioxidant additive was injected into the mixer via feed throat (Examples 1 and 7), into the suction side of the gear pump (Example 4 and 5), placed immediately downstream of the mixer, or both, into the mixer and the gear pump (Examples 2 and 3). In Example 6 no antioxidant additive was introduced into the process. The mixer was operated at such a speed as to create a sufficient temperature to melt the resin. The operating conditions and the results are summarized in Table 1 below.

TABLE 1
Mobil 5340D Tailoring Farrel 4" - LMSD
Polymer Rate - 630 lb/hr

| Example | SEI Main Drive (HP-HR/lb) | Melt Temp (°C) | Irganox 1076 Feed Throat (PPM) | Injection (PPM) | N$_2$ Blanket | MFR | Visual Color Ranking* |
|---|---|---|---|---|---|---|---|
| 1 | 0.128 | 239 | 300 | – | No | 142 | 3 |
| 2 | 0.128 | 239 | 150 | 200 | No | 147 | 2 |
| 3 | 0.125 | 237 | 150 | 400 | No | 150 | 3 |
| 4 | 0.122 | 232 | – | 400 | No | 167 | 1 |
| 5 | 0.122 | 230 | – | 400 | Yes | 148 | 1 |
| 6 | 0.125 | 239 | – | – | No | 214 | 2 |
| 7 | 0.125 | 234 | 150 | – | No | 144 | 3 |

*1-Best, 2-Intermediate, 3-Worst

Note: MFR a ratio of MI$_{21}$/MI$_2$ is a measure of tailoring (i.e., increased tailoring yields higher MFR and lower die swell) and correlates with resin die swell.

As the results of Table I indicate, in Examples 1 and 7, the injection of the Irganox 1076 additive at the feed throat of the mixer produced resins which required relatively high tailoring temperatures and specific energy input requirements. These resins had poor color rankings. Similar results were obtained with the co-injection of the Irganox 1076 additive into the mixer and the pump (Examples 2 and 3). In contrast, the injection of the same additive into the suction side of the gear pump in Examples 4 and 5 produced a resin at a substantially lower temperature than was required in Examples 1-3 and 7, the SEI requirements were also lowered, and the resin had an excellent color ranking (i.e., the color of the resin was whiter). In Example 6, no Irganox 1076 was added. The resin produced in that Example showed a relatively high level of tailoring, as indicated by MFR of greater than 142, the minimum necessary for a resin having acceptable tailoring characteristics, good color, but it contained no antioxidant for product protection.

The data demonstrates that the post-injection of the antioxidant resin into the pump, downstream of the mixer, will allow the manufacturer to reduce the SEI requirements by 8-10% or, alternatively, increase the manufacturing rate by about 8-10%, and the color of the resulting resin would be improved as compared to the production of a comparable resin with the injection of the antioxidant additive into the mixer. It is estimated that the 8-10% reduction would be obtained if the MFR of the resin produced with the post-injection of the antioxidant (e.g., Example 4) were the same as that of the resin produced with the injection of the antioxidant into the mixer.

## Claims

1. A process for the preparation of antioxidant containing polymer resin pellets, which process comprises introducing the polymer into mixing means in the absence of added antioxidant; removing the compounded polymer from the mixing means; adding antioxidant to the polymer downstream from the mixing means, and pelletizing the antioxidant containing polymer.

2. A process according to Claim 1 wherein in the mixing means the polymer is melted.

3. A process according to Claim 1 or 2 wherein the antioxidant is added to the polymer in pumping means.

4. A process according to any preceding claim wherein the antioxidant-containing polymer is forced to exit the pumping means and be conducted to pelletizing means.

5. A process according to any preceding claim wherein the pelletized polymer resin has had sufficient tailoring imparted thereto in the mixing means to that its die swell satisfies the requirements of the general purpose blow molding resin.

4